Europäisches Patentamt

**European Patent Office**

Office européen des brevets

(11) Veröffentlichungsnummer: **0 039 441**
A2

(12) **EUROPÄISCHE PATENTANMELDUNG**

(21) Anmeldenummer: **81103011.3**

(51) Int. Cl.³: **A 01 N 25/28**, B 01 J 13/02

(22) Anmeldetag: **21.04.81**

(30) Priorität: **26.04.80 DE 3016189**

(43) Veröffentlichungstag der Anmeldung: **11.11.81**
**Patentblatt 81/45**

(84) Benannte Vertragsstaaten: **BE CH DE FR GB IT LI NL**

(71) Anmelder: **BAYER AG, Zentralbereich Patente, Marken und Lizenzen, D-5090 Leverkusen 1, Bayerwerk (DE)**

(72) Erfinder: **Bömer, Bruno, Dr., Gustav-Freytag-Strasse 2, D-5090 Leverkusen (DE)**
Erfinder: **Schnöring, Hildegard, Dr., Rappenweg 8, D-5600 Wuppertal 11 (DE)**
Erfinder: **Schmidt, Rolf, An der Joch 6, D-5000 Koeln 80 (DE)**
Erfinder: **Niessen, Heinz Josef, Dr., Pannenberg 73, D-5060 Bergische-Gladbach (DE)**

(54) **Lagerbeständige, Pflanzenbehandlungsmittel enthaltende Mikrokapseln-Suspensionen, Verfahren zu deren Herstellung und deren Verwendung.**

(57) Lagerbeständige Mikrokapsel-Suspensionen, welche Pflanzenbehandlungsmittel als Kernmaterialien enthalten. Die erfindungsgemässen Mikrokapsel-Suspensionen lassen sich herstellen, indem man

a) Gelatine gegebenenfalls im Gemisch mit Gummiarabicum, Carboxylmethylcellulose und/oder anionischen Polymeren in Gegenwart des einzukapselnden Pflanzenbehandlungsmittels sowie gegebenenfalls in Gegenwart von Zusatzstoffen in wäßrigem Medium durch Verdünnung, Abkühlung und/oder durch Änderung des pH-Wertes des Gemisches koazerviert,

b) die Hüllen der dabei entstehenden Mikrokapseln mit einem Gerbstoff in saurem Medium vorhärtet und

c) die so erhaltenen Mikrokapseln dann mit Carbonylverbindungen im pH-Bereich zwischen 5,5 und 9,0 weiter härtet.

ACTORUM AG

0039441

BAYER AKTIENGESELLSCHAFT          5090 Leverkusen, Bayerwerk
Zentralbereich
Patente, Marken und Lizenzen   Dü/kl

V

Lagerbeständige, Pflanzenbehandlungsmittel enthaltende
Mikrokapsel-Suspensionen, Verfahren zu deren Herstellung
und deren Verwendung

Die vorliegende Erfindung betrifft lagerbeständige Mikrokapsel-Suspensionen, welche Pflanzenbehandlungsmittel als Kernmaterialien enthalten, ein Verfahren zur Herstellung dieser Mikrokapsel-Suspensionen und deren Verwendung im Pflanzenschutz.

Es ist bereits bekannt geworden, daß sich Mikrokapsel-Suspensionen (=Slurries), welche Pflanzenbehandlungsmittel als Kernmaterialien enthalten, nach dem Verfahren der Komplexkoazervation herstellen und in Form wäßriger Suspensionen auf die Pflanzen und deren Lebensraum ausbringen lassen (vgl. DE-AS 1 185 154, DE-AS 1 248 016 und DE-OS 2 734 577). Im Vergleich zu den nicht mikroverkapselten Wirkstoffen weisen die in derartigen Kapseln eingeschlossenen Wirkstoffe häufig eine verlängerte Wirkungsdauer und/oder verminderte Toxizität auf. Diese bekannten, Pflanzenbehandlungsmittel enthaltenden Mikrokapsel-Suspensionen besitzen jedoch den entscheidenden

Le A 20 256-Ausland

Nachteil, daß sie unter den in der Praxis auftretenden Bedingungen nicht ausreichend transport- und lagerbeständig sind. So neigen derartige Slurries insbesondere bei höheren Temperaturen, wie sie in warmen Klimazonen herrschen können, und bei Lagerzeiten von bis zu zwei Jahren zur Agglomeration, so daß die unbedingt notwendige Redispergierbarkeit der Kapseln nicht mehr gegeben ist. Ferner tritt in vielen Fällen eine Zersetzung des Wirkstoffes ein oder die Kapseln sind nicht genügend dicht, um über einen längeren Zeitraum hinweg den für die Abgabe des Wirkstoffes gewünschten Retardationseffekt zu gewährleisten.

Weiterhin ist bekannt geworden, daß sich nach dem Komplexkoazervationsverfahren hergestellte Mikrokapseln, deren Hüllen aus Gelatine bestehen oder Gelatine enthalten, mit Hilfe von Carbonylverbindungen, Gerbstoffen oder mehrwertigen Metallionen härten lassen (vgl. AT-PS 221 971).

Die Härtung mit Carbonylverbindungen, wie Aldehyden oder Ketonen, die zu einer irreversiblen covalenten Vernetzung der Gelatine führen, ist jedoch nur im alkalischen Bereich möglich. Bei derartigen pH-Werten löst sich unvernetztes Koazervat bereits wieder langsam auf. Ein weiterer Nachteil besteht darin, daß bei einer Härtung mit Carbonylverbindungen, z.B. mit Glutardialdehyd, zunehmend stark deformierte Kapseln erhalten werden, wenn man die Konzentration des Härtungs-

Le A 20 256

mittels auf über 7,5 Gew.-%, bezogen auf eingesetztes Hüllenmaterial, steigert. Diese Kapseln besitzen eine geringere mechanische Stabilität als kugelförmige Kapseln und erreichen daher nicht die in der Praxis notwendige Stabilität.

Im Gegensatz zu den Carbonylverbindungen bewirken natürliche und synthetische Gerbstoffe sowie mehrwertige Metallionen eine vom pH-Wert abhängige reversible ionische Vernetzung des gelatinehaltigen Koazervates. So sind z.B. mit Aluminiumsulfat gehärtete Mikrokapseln nur bei pH-Werten unterhalb 4,5 längere Zeit lagerstabil. Auch die Wirksamkeit der meisten natürlichen Gerbstoffe, wie Tannin, Mimosa, Quebracho und Gallussäure, sowie synthetischer Austauschgerbstoffe nimmt bei Steigerung des pH-Wertes über etwa 5,0 stark ab. Aus diesem Grund ist auch eine Härtung von Mikrokapseln auf Gelatine-Basis, welche Pflanzenbehandlungsmittel enthalten, mit einem Gerbstoff oder mit mehrwertigen Metallionen allein nicht geeignet, um die praxisgerechte Langzeitstabilität der Mikrokapsel-Suspensionen in der Nähe des Neutralpunktes zu erzielen.

Es wurden nun lagerbeständige Mikrokapsel-Suspensionen gefunden, welche Pflanzenbehandlungsmittel als Kernmaterialien enthalten.

Weiterhin wurde gefunden, daß sich die erfindungsgemäßen lagerbeständigen Mikrokapsel-Suspensionen herstellen lassen, indem man

Le A 20 256

a) Gelatine gegebenenfalls im Gemisch mit Gummi arabicum, Carboxylmethylcellulose und/oder anionischen Polymeren in Gegenwart des einzukapselnden Pflanzenbehandlungsmittels sowie gegebenenfalls in Gegenwart von Zusatzstoffen in wäßrigem Medium durch Verdünnung, Abkühlung und/oder durch Änderung des pH-Wertes des Gemisches koazerviert,

b) die Hüllen der dabei entstehenden Mikrokapseln mit einem Gerbstoff in saurem Medium vorhärtet und

c) die so erhaltenen Mikrokapseln dann mit Carbonylverbindungen im pH-Bereich zwischen 5,5 und 9,0 weiter härtet.

Außerdem wurde gefunden, daß sich die erfindungsgemäßen, lagerbeständigen Mikrokapsel-Suspensionen je nach dem enthaltenen Kernmaterial für die unterschiedlichsten Zwecke in der Landwirtschaft und im Gartenbau verwenden lassen.

Überraschenderweise sind die erfindungsgemäßen Mikrokapsel-Suspensionen lagerstabil, jederzeit redispergierbar und gleichzeitig hinreichend dicht, um den für die Freisetzung des eingekapselten Pflanzenbehandlungsmittels erwünschten Retardationseffekt (Slow-release-Effekt) zu gewährleisten. Derartige Eigenschaften konnten unter Berücksichtigung des bekannten Standes der Technik nicht erwartet werden, denn bei den entsprechenden chemisch

Le A 20 256

ähnlichen vorbeschriebenen Mikrokapsel-Suspensionen sind die gewünschten Eigenschaften nicht alle gleichzeitig vorhanden. Ferner konnte nicht vorausgesehen werden, daß beim Arbeiten nach dem erfindungsgemäßen Verfahren Mikrokapsel-Suspensionen entstehen würden, die im Gegensatz zu den analogen vorbekannten Mikrokapsel-Suspensionen den Anforderungen der Praxis gerecht werden.

Die erfindungsgemäßen Mikrokapsel-Suspensionen zeichnen sich durch mehrere Vorteile aus. So sind sie in einfacher Weise herstellbar und können auch bei höherer Temperatur, also bei Temperaturen von bis zu 50°C und mehr, über längere Zeit gelagert werden, ohne dadurch ihre Redispergierbarkeit oder den für die Abgabe des Kernmaterials erwünschten Retardationseffekt zu verlieren. Außerdem sind die erfindungsgemäßen Mikrokapsel-Suspensionen bedingt durch die nahezu kugelförmige Gestalt der Kapseln auch gegen mechanische Beanspruchungen relativ widerstandsfähig. Ein weiterer besonderer Vorteil besteht darin, daß sich nach dem erfindungsgemäßen Verfahren auch solche Pflanzenbehandlungsmittel einkapseln lassen, die hydrolyseempfindlich sind oder sich im alkalischen Medium zersetzen. Schließlich lassen sich durch geeignete Wahl der Härtungsmittel Mikrokapseln herstellen, die den jeweils gewünschten Anforderungen bezüglich Freisetzungstemperatur für das Kernmaterial und Retardationseffekt gezielt angepaßt sind.

Als Wandbildungsmaterialien kommen bei der Herstellung

Le A 20 256

0039441

der erfindungsgemäßen Mikrokapsel-Suspensionen vorzugsweise sauer oder alkalisch geäscherte Gelatine oder Mischungen von derartigen Gelatinen mit Gummi arabicum, Carboxymethylcellulose und/oder anionischen, wasserlöslichen Polymeren in Frage, die aus

(A)  einem Copolymerisat, dessen Struktureinheiten zu 65 - 90 Mol-%, bezogen auf Polymer, aus statistisch verteilten Resten des Acrylamids und 10 - 35 Mol-% Resten von Maleinsäure oder Maleinsäureanhydrid bestehen, und das eine Grenzviskositätszahl $[\eta]$ von 0,05 bis 1,0 $[dl/g]$ besitzt, und

(B)  einem Copolymerisat, dessen Struktureinheiten aus statistisch verteilten polymerisierten Resten von Acrylamid, Acrylsäure und Maleinsäure bestehen - wobei die Maleinsäurereste zumindest teilweise in Salzform vorliegen - das eine Grenzviskositätszahl $[\eta]$ von 0,05 - 1,5 $[dl/g]$ besitzt, und 65 bis 90 Mol-%, bezogen auf Polymer, Reste des Acrylamids und der Acrylsäure zusammen, und 10 - 35 Mol-% Reste der Maleinsäure enthält,

bestehen, wobei das Gewichtsverhältnis (A):(B) 1:2 bis 20:1 beträgt.

Die als Wandbildungsmaterialien in Betracht kommenden Stoffe und deren Verwendung für diesen Zweck sind bekannt (vgl. DE-AS 1 122 495 und DE-OS 27 34 577).

Le A 20 256

Die anionischen Polymeren werden im Falle des erfindungsgemäßen Verfahrens in Form wäßriger Lösungen eingesetzt, die 5 bis 30 Gewichtsprozent, bezogen auf die Lösungen, an Polymeren enthalten.

Besonders bevorzugte Wandbildungsmaterialien sind im vorliegenden Fall Mischungen, die Gelatine, Carboxymethylcellulose und/oder Gummi arabicum sowie die zuvor als bevorzugt genannten wasserlöslichen anionischen Polymeren enthalten.

Unter Pflanzenbehandlungsmitteln sind im Falle des erfindungsgemäßen Verfahrens üblicherweise im Pflanzenschutz verwendbare Wirkstoffe zu verstehen. Hierzu gehören z.B. Insektizide, Nematizide, Akarizide, Rodentizide, Fungizide, Herbizide und Pflanzenwachstumsregulatoren.

Nach dem erfindungsgemäßen Verfahren lassen sich sowohl feste als auch flüssige Pflanzenbehandlungsmittel mikroverkapseln, sofern sie in Wasser schwer löslich sind. Unter schwer löslichen Stoffen sind hierbei solche zu verstehen, die in Wasser bei 20°C zu maximal 1,5 % löslich sind.

Als Beispiele für Pflanzenbehandlungsmittel, die sich nach dem erfindungsgemäßen Verfahren mikroverkapseln lassen, seien im einzelnen genannt:

Le A 20 256

O-(Ethyl-0-(4-methylthio)-phenyl)-S-propyl-dithiophosphat

(0,0-Diethylthionophosphoryl)-$\alpha$-oximino-phenylessigsäurenitril

2-Isopropoxy-phenyl-N-methylcarbamat N-(2-Benzthiazolyl)-N,N'-dimethylharnstoff 3-Methylthio-4-amino-6-tert.-butyl-1,2,4-triazin-5-on 3-Methylthio-4-isobutylidenamino-6-tert.-butyl-1,2,4-triazin-5-on 2-Chlor-4-ethylamino-6-isopropylamino-1,3,5-triazin N'-(3,4-Dichlorphenyl)-N,N-dimethylharnstoff 2,3-Dihydro-2,2-dimethyl-7-benzofuranyl-methyl-carbamat 3,5-Dimethyl-4-methylthiophenyl-N-methyl-carbamat

0,0-Diethyl-0-(3-chlor-4-methyl-7-cumarinyl)-thiophosphat

$\gamma$-Hexachlorcyclohexan

6,7,8,9,10,10-Hexachlor-1,5,5A,6,9,9A-hexahydro-6,9-methan-2,4,3-benzo-dioxathiepin-3-oxid

1,4,5,6,7,8,8-Heptachlor-4,7-endo-methylen-3A,4,7,7A-tetrahydroinden

N-Trichlormethylmercapto-4-cyclohexan-1,2-dicarboximid N-Trichlormethylthiophthalimid 2-(2-Furyl)-benzimidazol 5-Amino-1-bis-(dimethylamido)-phosphoryl-3-phenyl-1,2,4-triazol 6-Methyl-2,3-chinoxalin-dithiol-cyclocarbonat 4-Hydroxy-3-(1,2,3,4-tetrahydro-1-naphthyl)-cumarin.

0,0-Diethyl-0-(p-nitrophenyl)-thionophosphorsäureester.

Die Pflanzenbehandlungsmittel werden bei dem erfindungsgemäßen Verfahren je nach dem Aggregatzustand

Le A 20 256

0039441

entweder in Substanz oder in Lösung in einem inerten organischen Lösungsmittel, wie zum Beispiel Benzol, Toluol oder Xylol, eingesetzt. Feste Pflanzenbehandlungsmittel werden bevorzugt in Lösung zugegeben. Sie können jedoch auch, falls gewünscht, als Feststoff eingekapselt werden.

Als Zusatzstoffe können bei dem erfindungsgemäßen Verfahren alle für derartige Mikroeinkapselungen üblichen Additive verwendet werden. Hierzu gehören zum Beispiel Frostschutzmittel, wie 1,2-Ethandiol.

Als Gerbstoffe, die bei dem erfindungsgemäßen Verfahren als Vorhärtungsmittel dienen, kommen natürliche Gerbstoffe und synthetische Austauschgerbstoffe in Frage. Als natürliche Gerbstoffe seien Tannin, Mimosa, Quebracho und Gallussäure speziell genannt.

Als synthetische Austauschgerbstoffe seien methylenverknüpfte Kondensationsprodukte aus Oxiarylsulfon und aromatischen Sulfonsäuren, wie das unter der Bezeichnung Tanigan Ⓡ QF bekannte Produkt, und ferner methylenverknüpfte Kondensationsprodukte von aromatischen Sulfonsäuren, wie die unter den Bezeichnungen Tanigan Ⓡ PR und Tanigan Ⓡ PT bekannten Produkte, speziell genannt.

Als Carbonylverbindungen, die bei dem erfindungsgemäßen Verfahren als Härtungsmittel erforderlich sind, kommen alle ausreichend reaktiven Aldehyde und Ketone in Betracht.

Le A 20 256

0039441

Vorzugsweise verwendbar sind Formaldehyd, Glutardialdehyd, Glyoxal und Pentadion-2,3.

Bei der Durchführung des erfindungsgemäßen Verfahrens arbeitet man in wässrigem Medium.

Die Koazervierung wird bei dem erfindungsgemäßen Verfahren entweder durch Verdünnung des Reaktionsgemisches, Abkühlung des Reaktionsgemisches oder durch Änderung des pH-Wertes des Reaktionsgemisches oder auch durch eine Kombination dieser Maßnahmen durchgeführt. Als Verdünnungsmittel kommen hierbei vorzugsweise Wasser und/oder mit Wasser mischbare Alkohole, wie Methanol oder Ethanol, in Frage. Eine Änderung des pH-Wertes kann, je nach dem verwendeten Kolloid, durch Zusatz von Säure oder von Base erfolgen.

Die Koazervierung kann bei dem erfindungsgemäßen Verfahren innerhalb eines größeren Temperaturbereiches erfolgen. Im allgemeinen arbeitet man bei Temperaturen zwischen 0°C und 80°C, vorzugsweise zwischen 5°C und 60°C.

Die Vorhärtung der Mikrokapseln wird bei dem erfindungsgemäßen Verfahren in saurem Medium vorgenommen.

Le A 20 256

Im allgemeinen arbeitet man bei der Vorhärtung bei pH-Werten zwischen 3,0 und 6,0, vorzugsweise zwischen 3,5 und 5,5.

Bei der Vorhärtung kann die Temperatur innerhalb eines bestimmten Bereiches variiert werden. Im allgemeinen arbeitet man bei Temperaturen zwischen 5°C und 60°C, vorzugsweise zwischen 8°C und 50°C.

Die Härtung der vorgehärteten Mikrokapseln mit Carbonylverbindungen wird im pH-Bereich 5,5 bis 9,0, vorzugsweise zwischen 6,0 und 8,5 vorgenommen. Weist die Kapselsuspension bei Beginn der Härtung noch nicht den gewünschten pH-Wert auf, so wird dieser durch Zugabe von Basen sowie gegebenenfalls von Puffer-Lösungen eingestellt.

Als Basen kommen hierbei vorzugsweise wässrige Natronlauge, wässrige Kalilauge und wässrige Sodalösung in Frage. Als Pufferlösungen seien wässrige Lösungen von Natrium-dihydrogen-phosphat und Dinatrium-hydrogen-phosphat speziell genannt.

Die Temperatur kann bei der Härtung mit Carbonylverbindungen innerhalb eines bestimmten Bereiches variiert werden. Im allgemeinen arbeitet man bei Temperaturen zwischen 0°C und 70°C, vorzugsweise zwischen 20°C und 60°C.

Le A 20 256

Bei der Durchführung des erfindungsgemäßen Verfahrens kann das Vorhärtungsmittel während oder nach der Koazervierung zugegeben werden. Besonders vorteilhaft ist es, das Vorhärtungsmittel mit dem Verdünnungsmittel, also bevorzugt mit dem zur Verdünnung dienenden Wasser, zuzugeben, da man bei dieser Verfahrensweise Kapseln mit besonders dicker Hülle und einen sehr geringen Anteil von Leerkoazervat, d.h. Wandmaterial ohne eingeschlossenes Kernmaterial, erhält.

Die als eigentliches Härtungsmittel fungierende Carbonylkomponente wird nach der Koazervierung zugegeben. Bevorzugt ist die Zugabe nach erfolgter Vorhärtung in einer sich daran anschließenden Phase, in der die Kapselsuspension auf Temperaturen zwischen 0°C und 10°C abgekühlt wird, beziehungsweise eine Zugabe nach beendeter Gelatinierung der Koazervathülle.

Die Härtungswirkung der jeweiligen Carbonylkomponente hängt vom pH-Wert der Kapselsuspension ab. Der jeweils optimale Wert kann durch wenige Vorversuche ermittelt werde. So liegt der günstigste pH-Bereich für Glutardialdehyd zwischen 6,0 und 9,0, während Formaldehyd erst oberhalb eines pH-Wertes von 8 merkliche Härtungswirkung zeigt.

Le A 20 256

0039441

Bei der Durchführung des erfindungsgemäßen Verfahrens geht man bevorzugt so vor, daß man zunächst die Hüllen und Kernmaterialien sowie gegebenenfalls Zusatzstoffe in wässriger Lösung in dem jeweils gewünschten Mengenverhältnis bei Temperaturen zwischen 40°C und 60°C unter Rühren bis zum Erreichen einer mittleren Partikelgröße von 5 bis 15 μm emulgiert. Das jeweilige Pflanzenbehandlungsmittel wird hierbei entweder in Substanz, oder in einem mit Wasser nicht mischbaren inerten organischen Solvens gelöst zugegeben. Zur Einleitung der Koazervierung wird dann eine erwärmte, Vorhärtungsmittel sowie gegebenenfalls weitere Zusatzstoffe enthaltende wässrige Lösung eingerührt.

Danach wird das Gemisch unter ständigem Rühren auf Temperaturen zwischen 10°C und 0°C abgekühlt, mit einer wässrigen Lösung der zur Härtung dienenden Carbonylkomponente versetzt, unter weiterem Rühren auf Raumtemperatur erwärmt und anschließend durch Zugabe einer wässrigen Base sowie gegebenenfalls einer Pufferlösung auf einen pH-Wert in dem gewünschten Bereich gebracht und 1 bis 24 Stunden bei 20 bis 70°C nachgerührt. Die entstehende Kapselsuspension kann, falls gewünscht, mit Hilfe eines Sprühtrockners oder im Fließbett getrocknet werden, so daß frei fließende Pulver entstehen.

Die erfindungsgemäßen Mikrokapsel-Suspensionen sind auch bei höheren Temperaturen lagerbeständig und lassen sich je nach dem enthaltenen Kernmaterial für die unterschiedlichsten Zwecke in der Landwirtschaft und im Gartenbau verwenden. Die Mikrokapsel-Suspensionen sind jederzeit redispergierbar und können nach den üblichen Methoden, zum Beispiel durch Spritzen auf die Pflanzen und deren Lebensraum ausgebracht werden. Es ist auch möglich, die erfindungsgemäßen Mikrokapsel-Suspensionen vor der Anwendung mit Formulierhilfsstoffen zu versetzen.

Werden die erfindungsgemäßen Mikrokapsel-Suspensionen nach ihrer Herstellung getrocknet, so bleibt auch bei den dabei entstehenden frei fließeneden Pulvern die Lagerbeständigkeit und der Retardationseffekt für den eingeschlossenen Wirkstoff in vollem Umfang erhalten.

Die nach dem erfindungsgemäßen Verfahren mikroverkapselten Stoffe zeigen im allgemeinen eine bessere Dauerwirkung als die betreffenden Stoffe in unverkapseltem Zustand.

Die Herstellung und die Eigenschaften der erfindungsgemäßen Mikrokapsel-Suspensionen gehen aus den nachfolgenden Beispielen hervor.

Le A 20 256

Herstellungsbeispiele

## Beispiel 1

I) <u>Herstellung der anionischen Polymerlösung</u>

a) Polymerisation: (Copolymerisat (A))

225 g Acrylamid, 75 g Maleinsäureanhydrid und 3 g Azoisobuttersäuredinitril werden in 2,7 l Essig- säureethylester gelöst. Die Lösung wird durch mehrmaliges Evakuieren der Apparatur und Füllen mit Stickstoff von Sauerstoff befreit und unter Sauerstoffausschluß 20 Stunden bei 60°C gerührt. Das ausgefallene Polymerisat wird abfiltriert, gründlich mit Essigsäureethylester gewaschen und im Vakuum bei 60°C getrocknet. Man erhält 273 g eines feinpulvrigen Polymeren mit einer in 0,9 %iger wäßriger NaCl-Lösung bestimmten Viskositäts- zahl (intrisic viscosity) $\underline{/\bar{\eta}\underline{/}} = 0,14 \ \underline{/\bar{d}l/g\underline{/}}$.

b) Hydrolyse: (Copolymerisat (B)) 100 g des trockenen Polymeren gemäß I a) werden in 900 ml entmineralisiertem Wasser gelöst, und die Lösung wird bis zum Erreichen eines pH-Wertes von 4,4 bis 4,6 bei Normaldruck unter Rückfluß erhitzt (ca. 12 - 18 Stunden).

c) Polymerlösung 150 g trockenes Polymerisat gemäß I a werden in 1350 ml entmineralisiertem Wasser gelöst. Die

<u>Le A 20 256</u>

Lösung zeigt einen pH-Wert von ~ 2,2. 200 ml dieser Lösung werden mit 50 ml der hydrolysierten Lösung gemäß I a gemischt. Die Mischung besitzt einen pH-Wert von 3,2 bis 3,4.

II) <u>Herstellung der Mikrokapsel-Suspension</u>

27,5 g einer säurebehandelten Schweinehaut-Gelatine, die einen isoelektrischen Punkt bei 8,3 besitzt und in 10 Gew.-%iger wässriger Lösung bei 40°C eine Viskosität von 25 mPas aufweist, werden bei 50°C in 248,5 g Wasser gelöst. Zu dieser Lösung gibt man bei 50°C 225 g einer 10 Gew.-%igen wässrigen, gemäß I c hergestellten Polymerlösung und rührt bis eine optisch klare Lösung ensteht. Dieser Lösung werden 234,3 g einer 85,4 Gew.-%igen Lösung von (0,0-Di-ethylthionophosphoryl)-∝-oximino-phenylessigsäure-nitril in Xylol zugesetzt. Die Mischung wird gerührt, bis eine Tropfengröße von 5 bis 15 μm erreicht ist.

Zu dieser Emulsion wird unter ständigem Rühren eine auf 50°C erwärmte Mischung aus 37,5 g einer 2 Gew.-%igen, wässrigen Lösung von Carboxymethylcellulose und 50 g einer 10 Gew.-%igen wässrigen Tannin-Lösung und 125 g Wasser gegeben. Anschließend läßt man die noch warme Kapsel-Suspension unter ständigem Rühren langsam abkühlen, setzt im Temperaturbereich zwischen 10°C und 5°C 12,5 g einer 10 Gew.-%igen wässrigen Glutardialdehyd-Lösung hinzu und rührt 15 bis 20 Minuten nach. Anschließend werden 15 g einer 20 Gew.-%igen wässrigen Natriumhydroxid-Lösung zugegeben und der pH-Wert des Gemisches durch Zugabe von ca. 30 ml einer 20 gew.-%igen wässrigen Phosphatpuffer-Lösung vom pH-Wert 8,0 auf 6,8 eingestellt.

Man erhält auf diese Weise eine Mikrokapsel-Suspension, die auch nach einer Lagerzeit von 24 Monaten bei Raumtemperatur keine Veränderungen zeigte.

Beispiele 2 - 6

Man verfährt jeweils wie im Beispiel 1 unter II angegeben, setzt aber die in der nachstehenden Tabelle 1 angegebenen Konzentrationen an Tannin bzw. Glutardialdehyd ein und arbeitet bei der Carbonylhärtung bei den ebenfalls in der Tabelle 1 aufgeführten pH-Werten. Die Mikrokapselsuspensionen wurden maximal 15 Tage bei 50°C und maximal 24 Monate bei 25°C gelagert. Bei den Warmlagerungsversuchen wurde alle 5 Tage und bei der der 25°C-Lagerung alle 6 Monate auf Redispergierbarkeit und beginnende Verklumpung der Mikrokapseln geprüft. Leicht redispergierbare Proben können durch einfaches Schütteln dispergiert werden.

Le A 20 256

Le A 20 256

Tabelle 1

| Beispiel Nr. | Gew.-% Härter bezogen auf Wandmaterial | | pH-Wert bei der Carbonyl-härtung | Lagerungs-temperatur $[°C]$ | Lagerungszeit | | Beurteilung der Kapselsuspension |
|---|---|---|---|---|---|---|---|
| | Tannin | Glutardialdehyd | | | | | |
| 2 | 5 | 5 | 6,8 | 50 | 15 | Tage | leicht redisper-gierbar |
| | | | | 25 | 18 | Monate | " " |
| 3 | 10 | 2,5 | 6,5 | 50 | 10 | Tage | " " |
| | | | | 25 | 18 | Monate | " " |
| 4 | 10 | 3,5 | 6,5 | 50 | 15 | Tage | " " |
| | | | | 25 | 24 | Monate | " " |
| 5 | 10 | 5 | 6,6 | 50 | 15 | Tage | " " |
| | | | | 25 | 24 | Monate | " " |
| 6* | 5 | 7,5 | 6,8 | 50 | 15 | Tage | " " |
| | | | | 25 | 24 | Monate | " " |

* Die Kapseln sind nach der Härtung deformiert, aber dicht.

- 18 -

0039441

Die im Beispiel 5 beschriebene Mikrokapsel-Suspension wurde sprühgetrocknet. Es entsteht ein frei fließendes Pulver, dessen Lagerstabilität und Retardationseffekt auf den eingeschlossenen Wirkstoff in vollem Umfang erhalten bleibt.


Beispiele 7 - 11


Man verfährt jeweils wie im Beispiel 1 unter II beschrieben, setzt aber als Pflanzenbehandlungsmittel jeweils 200 g 0-(Ethyl-0-(4-methylthio)-phenyl)-S-propyldithiophosphat ein und verwendet die in der nachstehenden Tabelle 2 angegebenen Konzentrationen an Tannin bzw. Glutardialdehyd und arbeitet bei der Carbonylhärtung bei den ebenfalls in der Tabelle 2 aufgeführten pH-Werten. Die Lagerungsversuche wurden wie in den Beispielen 2-6 durchgeführt.

Le A 20 256

Le A 20 256

Tabelle 2

| Beispiel Nr. | Gew.-% Härter bezogen auf Wandmaterial | | pH-Wert bei der Carbonyl-härtung | Lagerungs-temperatur $[°C]$ | Lagerungszeit | Beurteilung der Kapselsuspension |
|---|---|---|---|---|---|---|
| | Tannin | Glutardialdehyd | | | | |
| 7 | 6,6 | 3,0 | 6,5 | 50 | 10 Tage | leicht redisper-gierbar |
| | | | | 25 | 12 Monate | "      " |
| 8 | 9,9 | 2,0 | 6,6 | 50 | 5 Tage | "      " |
| | | | | 25 | 6 Monate | "      " |
| 9 | 10,0 | 2,5 | 6,8 | 50 | 10 Tage | "      " |
| | | | | 25 | 12 Monate | "      " |
| 10 | 10,0 | 4,0 | 6,6 | 50 | 15 Tage | "      " |
| | | | | 25 | 24 Monate | "      " |
| 11 | 12,0 | 5,0 | 6,5 | 50 | 15 Tage | "      " |
| | | | | 25 | 24 Monate | "      " |

0039441

0039441

Die im Beispiel 11 beschriebene Mikrokapsel-Suspension wurde sprühgetrocknet. Es entsteht ein frei fließendes Pulver, dessen Lagerstabilität und Retardationseffekt auf den eingeschossenen Wirkstoff in vollem Umfang erhalten bleibt.

Beispiel 12

Man verfährt wie im Beispiel 1 unter II beschrieben, setzt aber als Pflanzenbehandlungsmittel 120 g an 2-Isopropoxy-phenyl-N-methylcarbamat ein, das zuvor auf eine Korngröße von 1 bis 10 µm gemahlen worden war.

Ein intertes Solvens zum Lösen des festen Wirkstoffes wurde nicht zugesetzt. Man erhält eine lagerbeständige Suspension, die auf den eingekapselten Wirkstoff eine gute Retardationswirkung ausübt.

Le A 20 256

Vergleichsbeispiele 1 - 14

Man verfährt jeweils wie im Beispiel 1 unter II beschrieben, setzt aber nur jeweils einen Gerbstoff oder eine Carbonylkomponente zur Härtung der Mikrokapseln ein. Die jeweils eingesetzten Konzentrationen an Härtungsmittel und der pH-Wert, bei dem die Härtung durchgeführt wird, sind ebenso wie die Lagerbeständigkeit der entstehenden Mikrokapsel-Suspensionen in der nachfolgenden Tabelle 3 aufgeführt.

Unter "Kapsel aufgelöst" wird die Tatsache zusammengefaßt, daß die Kapselwände das Kernmaterial nicht mehr umschließen, so daß kein Retardationeffekt mehr erzielt werden kann.

Unter "nicht redispergierbar" werden die verschiedenen Zustände der Agglomeration der Kapseln zu Aggregaten mit Größen über 200µm bis hin zu schnittfesten Gallerten zusammengefaßt; ein Zustand also, der das Aufbringen der Slurries durch Versprühen infolge Düsenverstopfung unmöglich macht. Tritt ein solcher Zustand direkt bei der Kurzzeitlagerung bei 50°C auf, ist das Härtungsmittel mit Sicherheit völlig unbrauchbar für die vorliegenden Anforderungen.

Le A 20 256

Le A 20 256

Tabelle 3

| Vergleichs-Beispiel Nr. | Härtungs-mittel | % Härter bezogen auf Wand-material | pH-Wert bei der Härtung | Lagerungs-temperatur (°C) | Lagerungs-zeit | Beurteilung |
|---|---|---|---|---|---|---|
| 1 | Tannin | 5 | 3,9 | 50 | 5 Tage | nicht redisper-gierbar |
|   |        |   |     | 25 | 1 Monat | nicht redisper-gierbar |
| 2 | Tannin | 5 | 4,3 | 50 | 5 Tage | nicht redisper-gierbar |
|   |        |   |     | 25 | 1 Monat | nicht redisper-gierbar |
| 3 | Tannin | 5 | 6,1 | 50 | 5 Tage | Kapseln auf-gelöst |
|   |        |   |     | 25 | 1 Monat | Kapseln auf-gelöst |
| 4 | Tannin | 10 | 6,4 | 50 | 5 Tage | nicht redisper-gierbar |
|   |        |    |     | 25 | 1 Monat | nicht redisper-gierbar |
| 5 | Gallussäure | 5 | 3,9 | 50 | 5 Tage | Kapseln auf-gelöst |
|   |             |   |     | 25 | 1 Monat | Kapseln auf-gelöst |

0039441

Le A 20 256

Tabelle 3 (Fortsetzung)

| Vergleichs-Beispiel Nr. | Härtungs-mittel | % Härter bezogen auf Wand-material | pH-Wert bei der Härtung | Lagerungs-temperatur (°C) | Lagerungs-zeit | Beurteilung |
|---|---|---|---|---|---|---|
| 6 | Mimosa | 5 | 4,5 | 50 | 5 Tage | nicht redisper-gierbar |
| | | | | 25 | 1 Monat | nicht redisper-gierbar |
| 7 | Quebracho | 5 | 4,0 | 50 | 5 Tage | nicht redisper-gierbar |
| | | | | 25 | 1 Monat | nicht redisper-gierbar |
| 8 | Tanigan QF | 5 | 4,0 | 50 | 5 Tage | Kapseln aufge-löst |
| | | | | 25 | 1 Monat | Kapseln aufge-löst |
| 9 | Tanigan LD | 5 | 4,1 | 50 | 5 Tage | nicht redisper-gierbar |
| | | | | 25 | 1 Monat | nichr redisper-gierbar |
| 10 | Glyoxal | 0,1 | 4,1 | 50 | 5 Tage | Kapseln aufge-löst |
| | | | | 25 | 1 Monat | Kapseln aufge-löst |

0039441

Tabelle 3   (Fortsetzung)

| Vergleichs-Beispiel Nr. | Härtungs-mittel | % Härter bezogen auf Wand-material | pH-Wert bei der Härtung | Lagerungs-temperatur (°C) | Lagerungs-zeit | Beurteilung |
|---|---|---|---|---|---|---|
| 11 | Formaldehyd | 5 | 9 | 50 | 5 Tage | Wirkstoff zersetzt |
|  |  |  |  | 25 | 1 Monat | Wirkstoff zersetzt |
| 12 | Glutardialde-hyd | 5 | 7 | 50 | 5 Tage | nicht redisper-gierbar |
|  |  |  |  | 25 | 5-6 Monate | nicht redisper-gierbar |
| 13 | Glutardialde-hyd | 7,5 | 7 | 50 | 5 Tage | nicht redisper-gierbar |
|  |  |  |  | 25 | 7 Monate | nicht redisper-gierbar |
| 14 | Glutardialde-hyd | 10,0 | 7 | 50 | 5 Tage | nicht redisper-gierbar |
|  |  |  |  | 25 | 8 Monate | nicht redisper-gierbar |

0039441

Verwendungsbeispiele

Beispiel A

Phaedon-Larven-Test (Wirkungsdauer nach Spritzen)

Lösungsmittel: 3 Gewichtsteile Dimethylformamid
Emulgator:     1 Gewichtsteil Alkylarylpolyglykoläther

Zur Herstellung einer zweckmäßigen Wirkstoffzubereitung vermischt man 1 Gewichtsteil (O,O-Diethyl-thiono-phosphoryl)-ᾱ-oximino-phenyl-essigsäurenitril in mikroverkapselter Form mit der angegebenen Menge Lösungsmittel und der angegebenen Menge Emulgator und verdünnt das Konzentrat mit Wasser auf die gewünschte Konzentration.

Kohlpflanzen (Brassica oleracea) von ca. 10 - 15 cm Höhe werden mit der gewünschten Wirkstoffzubereitung tropfnaß gespritzt.

Nach 3 Tagen und dann nach jeweils 3 weiteren Tagen werden die Pflanzen mit Meerrettichblattkäfer-Larven (Phaedon cochleariae) besetzt. Danach wird jeweils geprüft, wie lange die Pflanzen frei von neuem Käfer-Larven-Befall bleiben.

Wirkstoffzubereitungen, Wirkstoffkonzentrationen und Resultate gehen aus der nachfolgenden Tabelle hervor.

Le A 20 256

- 27 -

## Tabelle A

Phaedon-Larven-Test (Wirkungsdauer nach Spritzen)

| Präparat gemäß Beispiel | Wirkstoffkonzentration in % | Pflanzen frei von erneutem Befall in Tagen |
|---|---|---|
| - | O | O |
| (Kontrolle) | | |
| 4 | 0,0125 | 15 |
| 5 | 0,0125 | 4 |
| 6 | 0,0125 | 8 |
| A* | 0,0125 | O |

* A = nicht mikroverkapselter Wirkstoff in handelsüblicher
   Formulierung;
   pH-Wert der eingesetzten Formulierung 6,5

Le A 20 256

**Beispiel B**

Plutella-Test (Wirkungsdauer nach Spritzen)

Lösungsmittel: 3 Gewichtsteile Dimethylformamid
Emulgator:      1 Gewichtsteil  Alkylarylpolyglykoläther

Zur Herstellung einer zweckmäßigen Wirkstoffzubereitung vermischt man 1 Gewichtsteil (O,O-Diethyl-thiono-phosphoryl)-α-oximino-phenyl-essigsäurenitril in mikroverkapselter Form mit der angegebenen Menge Lösungsmittel und der angegebenen Menge Emulgator und verdünnt das Konzentrat mit Wasser auf die gewünschte Konzentration.

Kohlpflanzen (Brassica oleracea) von ca. 10 - 15 cm Höhe werden mit der gewünschten Wirkstoffzubereitung tropfnaß gespritzt.

Nach 3 Tagen und dann nach jeweils 3 weiteren Tagen werden die Pflanzen mit Raupen der Kohlschabe (Plutella maculipennis) besetzt. Danach wird jeweils geprüft, wie lange die Pflanzen frei von neuem Raupen-Befall bleiben.

Wirkstoffzubereitungen, Wirkstoffkonzentrationen und Resultate gehen aus der nachfolgenden Tabelle hervor.

Le A 20 256

0039441

## T a b e l l e  B

Plutella - Test (Wirkungsdauer nach Spritzen)

| Präparat gemäß Bispiel | Wirkstoffkonzentration in % | Pflanzen frei von erneutem Befall in Tagen |
|---|---|---|
| - | O | O |
| (Kontrolle) | | |
| 4 | 0,0125 | 15 |
| 5 | 0,0125 | 11 |
| 6 | 0,0125 | 11 |
| A[*] | 0,0125 | O |

[*]A = nicht mikroverkapselter Wirkstoff in handelsüblicher Formulierung;
pH-Wert der eingesetzten Formulierung 6,5.

Le A 20 256

- 30 -

Beispiel C

Laphygma-Test (Wirkungsdauer nach Spritzen)


Lösungsmittel: 3 Gewichtsteile Dimethylformamid
Emulgator:    1 Gewichtsteil  Alkylarylpolyglykoläther


Zur Herstellung einer zweckmäßigen Wirkstoffzubereitung vermischt man 1 Gewichtsteil (O,O-Diethyl-thiono-phosphoryl)-$\alpha$-oximino-phenyl-essigsäurenitril in mikroverkapselter Form mit der angegebenen Menge Lösungsmittel und der angegebenen Menge Emulgazor und verdünnt das Konzentrat mit Wasser auf die gewünschte Konzentration.

Baumwollpflanzen (Gossypium hirsutum) von ca. 10 - 15 cm Höhe werden mit der gewünschten Wirkstoffzubereitung tropfnaß gespritzt.

Nach 3 Tagen und dann nach jeweils 3 weiteren Tagen werden die Pflanzen mit Raupen des Heerwurms (Laphygma frugiperda) besetzt. Danach wird jeweils geprüft, wie lange die Pflanzen frei von neuem Raupen-Befall bleiben.

Wirkstoffzubereitungen, Wirkstoffkonzentrationen und Resuktate gehen aus der nachfolgenden Tabelle hervor.


Le A 20 256

Tabelle C

Laphygma - Test (Wirkungsdauer nach Spritzen)

| Präparat gemäß Beispiel | Wirkstoffkonzentration in % | Pflanzen frei von erneutem Befall in Tagen |
|---|---|---|
| - | O | O |
| (Kontrolle) | | |
| 4 | 0,0125 | 22 |
| 5 | 0,0125 | 8 |
| 6 | 0,0125 | 22 |
| A* | 0,0125 | O |

*A = nicht mikroverkapselter Wirkstoff in handelsüblicher Formulierung;
pH-Wert der eingesetzten Formulierung 6,5.

Le A 20 256

Beispiel D

Phaedon-Larven-Test (Wirkungsdauer nach Spritzen)

Lösungsmittel: 3 Gewichtsteile   Dimethylformamid
Emulgator:    1 Gewichtsteil   Alkylarylpolyglykoläther

Zur Herstellung einer zweckmäßigen Wirkstoffzubereitung vermischt man 1 Gewichtsteil O-(Ethyl-O-(4-methylthio)-phenyl)-5-propyldithiophosphat in mikroverkapselter Form mit der angegebenen Menge Lösungsmittel und der angegebenen Menge Emulgator und verdünnt das Konzentrat mit Wasser auf die gewünschte Konzentration.

Kohlpflanzen (Brassica oleracea) von ca. 10 - 15 cm Höhe werden mit der gewünschten Wirkstoffzubereitung tropfnaß gespritzt.

Nach 3 Tagen und dann nach jeweils 3 weiteren Tagen werden die Pflanzen mit Meerrettichblattkäfer-Larven (Phaedon cochleariae) besetzt. Danach wird jeweils geprüft, wie lange die Pflanzen frei von neuem Käfer-Larven-Befall bleiben.

Wirkstoffzubereitungen, Wirkstoffkonzentrationen und Resultate gehen aus der nachfolgenden Tabelle hervor.

Le A 20 256

T a b e l l e   D

Phaedon-Larven-Test (Wirkungsdauer nach Spritzen)

| Präparat gemäß Beispiel | Wirkstoffkonzentration in % | Pflanzen frei von erneutem Befall in Tagen |
|---|---|---|
| - | 0 | 0 |
| (Kontrolle) | | |
| 9 | 0,025 | 18 |
| 11 | 0,025 | > 25 |
| B* | 0,025 | 14 |

*B  = nicht mikroverkapselter Wirkstoff in handels-
     üblicher Formulierung;
     pH-Wert der eingesetzten Formulierung 6,5.

Beispiel E

Plutella-Test (Wirkungsdauer nach Spritzen)

Lösungsmittel: 3 Gewichtsteile Dimethylformamid
Emulgator:      1 Gewichtsteil  Alkylarylpolyglykoläther

Zur Herstellung einer zweckmäßigen Wirkstoffzubereitung vermischt man 1 Gewichtsteil O-(Ethyl-O-(4-methylthio)-phenyl)-S-propyldithiophosphat in mikroverkapselter Form mit der angegebenen Menge Lösungsmittel und der angegebenen Menge Emulgator und verdünnt das Konzentrat mit Wasser auf die gewünschte Konzentration.

Kohlpflanzen (Brassica oleracea) von ca. 10 - 15 cm Höhe werden mit der gewünschten Wirkstoffzubereitung tropfnaß gespritzt.

Nach 3 Tagen und dann nach jeweils 3 weiteren Tagen werden die Pflanzen mit Raupen der Kohlschabe (Plutella maculipennis) besetzt. Danach wird jeweils geprüft, wie lange die Pflanzen frei von neuem Raupen-Befall bleiben.

Wirkstoffzubereitungen, Wirkstoffkonzentrationen und Resultate gehen aus der nachfolgenden Tabelle hervor.

Le A 20 256

T a b e l l e    E

Plutella-Test (Wirkungsdauer nach Spritzen)

| Präparat gemäß Beispiel | Wirkstoffkonzentration in % | Pflanzen frei von erneutem Befall in Tagen |
|---|---|---|
| - | 0 | 0 |
| (Kontrolle) | | |
| 9 | 0,025 | 18 |
| 11 | 0,025 | > 21 |
| B* | 0,025 | 14 |

*B = nicht mikroverkapselter Wirkstoff in handelsüblicher Formulierung;
pH-Wert der eingesetzten Formulierung 6,5.

Beispiel F

Laphygma-Test (Wirkungsdauer nach Spritzen)

Lösungsmittel:  3 Gewichtsteile  Dimethylformamid
Emulgator:      1 Gewichtsteil   Alkylarylpolyglykoläther

Zur Herstellung einer zweckmäßigen Wirkstoffzubereitung vermischt man 1 Gewichtsteil O-(Ethyl-O-(4-methylthio)-phenyl)-5-propyldithiophosphat in mikroverkapselter Form mit der angegebenen Menge Lösungsmittel und der angegebenen Menge Emulgator und verdünnt das Konzentrat mit Wasser auf die gewünschte Konzentration.

Baumwollpflanzen (Gossypium hirsutum von ca. 10 - 15 cm Höhe werden mit der gewünschten Wirkstoffzubereitung tropfnaß gespritzt.

Nach 3 Tagen un d dann nach jeweils 3 weiteren Tagen werden die Pflanzen mit Raupen des Heerwurms (Laphygma frugiperda) besetzt. Danach wird jedoch geprüft, wie lange die Pflanzen frei von neuem Raupen-Befall bleiben.

Wirkstoffzubereitungen, Wirkstoffkonzentrationen und Resultate gehen aus der nachfolgenden Tabelle hervor.

## T a b e l l e   F

Laphygma-Test (Wirkungsdauer nach Spritzen)

| Präparat gemäß Beispiel | Wirkstoffkonzentration in % | Pflanzen frei von erneutem Befall in Tagen |
|---|---|---|
| - | O | O |
| (Kontrolle) | | |
| 9 | 0,025 | 21 |
| 11 | 0,025 | 21 |
| B[*] | 0,025 | 14 |

[*]B  = nicht mikroverkapselter Wirkstoff in handelsüblicher Formulierung;
pH-Wert der eingesetzten Formulierung 6,5.

0039441

## Patentansprüche

1) Lagerbeständige Mikrokapsel-Suspensionen, welche Pflanzenbehandlungsmittel als Kernmaterialien enthalten.

2) Mikrokapsel-Suspensionen gemäß Anspruch 1, dadurch gekennzeichnet, daß sie als Kernmaterialien hydrolyseempfindliche Pflanzenbehandlungsmittel enthalten.

3) Verfahren zur Herstellung von lagerbeständigen Mikrokapsel-Suspensionen, dadurch gekennzeichnet, daß man

a) Gelatine gegebenenfalls im Gemisch mit Gummi arabicum, Carboxymethylcellulose und/oder anionischen Polymeren in Gegenwart des einzukapselnden Pflanzenbehandlungsmittels sowie gegebenenfalls in Gegenwart von Zusatzstoffen in wässrigem Medium durch Verdünnung, Abkühlung und/oder durch Änderung des pH-Wertes des Gemisches koazerviert,

b) die Hüllen der dabei entstehenden Mikrokapseln mit einem Gerbstoff in saurem Medium vorhärtet und

c) die so erhaltenen Mikrokapseln dann mit Carbonylverbindungen im pH-Bereich zwischen 5,5 und 9,0 weiter härtet.

Le A 20 256

4) Verfahren gemäß Anspruch 3, dadurch gekennzeichnet, daß man als Gerbstoff zur Vorhärtung Tannin, Mimosa, Quebracho, Gallussäure, methylenverknüpfte Kondensationsprodukte aus Oxiarylsulfon und aromatischen Sulfonsäuren oder methylenverknüpfte Kondensationsprodukte von aromatischen Sulfonsäuren einsetzt.

5) Verfahren gemäß Anspruch 3, dadurch gekennzeichnet, daß man als Carbonylkomponente zur Härtung Formaldehyd, Glutardialdehyd, Glyoxal oder Pentandion-2,3 einsetzt.

6) Verfahren gemäß Anspruch 3, dadurch gekennzeichnet, daß man als Gerbstoff zur Vorhärtung Tannin und als Carbonylkomponente zur weiteren Härtung Glutardialdehyd einsetzt.

7) Verfahren gemäß Anspruch 3, dadurch gekennzeichnet, daß man die Vorhärtung mit einem Gerbstoff bei einem pH-Wert zwischen 3,0 und 6,0 vornimmt.

8) Verfahren gemäß Anspruch 3, dadurch gekennzeichnet, daß man die Härtung mit einer Carbonylverbindung bei einem pH-Wert zwischen 6,0 und 8,5 vornimmt.

9) Verwendung von Mikrokapsel-Suspensionen gemäß Anspruch 1 in der Landwirtschaft und im Gartenbau.

Le A 20 256